# EUROPÄISCHE PATENTSCHRIFT

(11) **EP 2 376 565 B1**
(45) Veröffentlichungstag und Bekanntmachung des Hinweises auf die Patenterteilung: **10.09.2014**
(21) Anmeldenummer: 09755877.9
(22) Anmeldetag: 11.11.2009
(51) Int. Cl.: C08K 5/00, C08K 5/17, C08K 5/3465

(54) **VULKANISIERBARE KAUTSCHUKMISCHUNG, INSBESONDERE AUF BASIS ACM ODER AEM, UND VULKANISAT, INSBESONDERE EIN SCHLAUCHMATERIAL**
VULCANIZABLE RUBBER COMPOSITION, PARTICULARLY BASED ON ACM OR AEM, AND VULCANIZED MATERIAL, PARTICULARLY A HOSE MATERIAL
MÉLANGE DE CAOUTCHOUC VULCANISABLE, EN PARTICULIER À BASE D'ACM OU D'AEM, ET VULCANISAT, EN PARTICULIER UN MATÉRIAU TUBULAIRE

(30) Priorität: 15.12.2008 DE 102008055525
(43) Veröffentlichungstag der Anmeldung: 19.10.2011
(73) Patentinhaber: ContiTech Schlauch GmbH, 30165 Hannover (DE)
(72) Erfinder: DOERING, Lars, 34497 Korbach (DE); JUNGRICHTER, Frank, 34497 Korbach (DE); BEHRENS, Henrik, 30655 Hannover (DE); HERRMANN, Wolfram, 31515 Wunstorf (DE)
(74) Vertreter: Finger, Karsten
(86) Internationale Anmeldenummer: PCT/EP2009/064954
(87) Internationale Veröffentlichungsnummer: WO 2010/072465

(56) Entgegenhaltungen:
- EP-A1- 2 098 567
- WO-A1-2009/096545
- JP-A- 2009 097 018
- US-A1- 2002 037 970

## Beschreibung

Die Erfindung betrifft ein Vulkanisat, wie in Anspruch 1 definiert, aus einer vulkanisierbare Kautschukmischung, enthaltend:
- eine Kaütschukkomponente oder einen Kautschukkomponentenverschnitt sowie
- Mischungsingredienzien, beinhaltend wenigstens ein Vernetzungssystem, das wiederum einen Vernetzer und einen Co-Vernetzer umfasst.

Im Folgenden wird auf den Stand der Technik vulkanisierbarer Kautschukmischungen auf der Basis eines Acrylat-Kautschuks (ACM) oder eines Ethylen-Acrylat-Kautschuks (AEM) näher eingegangen, wobei diesbezüglich beispielsweise auf folgende Patentliteratur verwiesen wird:
EP 0 653 457 A2
EP 1 479 727 B1
EP 1 739 129 A1

Kautschukmischungen auf Basis ACM werden zumeist diaminisch vernetzt und/oder seifenvernetzt. Bei Kautschukmischungen auf Basis AEM kommt dagegen üblicherweise die diaminische und/oder peroxidische Vernetzung zur Anwendung. Bei diaminisch vernetzten Kautschukmischungen auf Basis ACM oder AEM ist es bislang Stand der Technik, Di-ortho-tolylguanidin (DOTG) als Co-Vernetzer einzusetzen. Ein Vernetzungsystem, umfassend DOTG als Co-Vernetzer, zeichnet sich durch eine optimale Kombination von Vulkanisationsgeschwindigkeit und Lagerstabilität der Kautschukmischung sowie der physikalischen Eigenschaften des Vulkanisats aus.

Der Co-Vernetzer DOTG ist jedoch als giftig eingestuft und bildet während der Vulkanisation das Spaltprodukt o-Toluidin, welches im Tierversuch und beim Menschen krebserregend wirkt. Die neuesten Untersuchungen der BG-Chemie haben aufgezeigt, dass o-Toluidin in erheblichem Maße während der Vulkanisation entsteht und in der Luft sowie in den Produkten konzentriert wird. Es ist daher nur eine Frage der Zeit, wann DOTG in die Stoffverbotsliste der Industrie, beispielsweise der Kfz-Industrie, aufgenommen wird. Eine Deklarationspflicht im IMDS besteht mittlerweile. Des weiteren ist ein absolutes Verbot von DOTG im Zuge der Einführung von REACH durchaus denkbar und wahrscheinlich.

Im Hintergrund der oben genannten Problematik um DOTG besteht die Aufgabe der Erfindung darin, ein Vernetzungssystem bereitzustellen, das frei von DOTG ist, wobei der Co-Vernetzer-Ersatzstoff ungiftig sein muss, sich ansonsten hinsichtlich Vulkanisationsgeschwindigkeit und Lagerstabilität der Kautschukmischung sowie der physikalischen Eigenschaften des Vulkanisates durch eine vergleichbare Wirkung wie DOTG auszeichnet, und zwar unter dem zusätzlichen Gesichtspunkt der Wirtschaftlichkeit. Darüber hinaus soll das neue Vernetzungssystem im Rahmen der Kautschukmischungstechnologie einem breiten Anwendungsspektrum zugänglich sein.

Gelöst wird diese Aufgabe dadurch, dass der Co-Vernetzer 1,8-Diazabicyclo [5.4.0] undec-7-en (DBU) ist.

Das neue Vernetzungssystem unter Einsatz von DBU wird nach wie vor vorzugsweise bei Kautschukmischungen auf der Basis von ACM oder AEM eingesetzt. Gegebenfalls kann bei manchen Anwendungsfällen ein sogenannter Temperprozess notwendig werden, was jedoch bei Einsatz von Kautschukmischungen auf der Basis von ACM oder AEM üblich ist, was von Herstellern derartiger Kautschuktypen sogar empfohlen wird.

Das DBU kann in flüssiger oder in angebatchter Form vorliegen.

Auch kann das DBU als Salz vorliegen. Die Salzbildung erfolgt dabei mit einer Verbindung, die über ein acides Proton verfügt. In der Salzverbindung liegt demnach DBU als DBUH⁺ vor. Die salzbildende Verbindung kann eine organische Carbonsäure (einschließlich organische Mono-, Di- und Polycarbonsäure), ein Phenol, ein Phenolharz, ein Alkohol, ein Amin, eine Sulfonsäure oder eine Mineralsäure sein. Auch eine Kombination der vorgenannten Verbindungen, beispielsweise eine Carbonsäure und eine Sulfonsäure, ist möglich. Vorteilhafterweise wird erst das Salz gebildet und danach das Salz angcbatcht.

Auch der Einsatz eines DBU-Mischungssystems, beispielsweise in flüssiger Form und als Salz, ist möglich.

Der Vernetzer ist vorzugsweise Hexamethylendiamincarbamat (HMDAC) und entfaltet in Kombination mit DBU eine optimale Wirkung in der Vulkanisationsgeschwindigkeit und in der Lagerstabilität der Kautschukmischung. Versuche haben darüber hinaus gezeigt, dass sich das Vulkanisat durch Verbesserungen im physikalischen Niveau, beispielsweise im Druckverformungsrest (DVR) und im Wärmealterungsprozess, auszeichnet.

Im Rahmen des Vernetzungssystems haben Vernetzer und Co-Vernetzer vorzugsweise folgende Mengenanteile in phr (per hundred rubber):
- Vernetzer (HMDAC): 0,1 bis 5,0 phr, insbesondere 0,5 bis 3,5 phr
- Co-Vernetzer (DBU): 0,1 bis 5,0 phr, insbesondere 0,5 bis 3,5 phr

Mit diesen bevorzugten Mengenanteilen sind in optimaler Weise die Verarbeitbarkeit sowie die Lagerstabilität der Kautschukmischung gewährleistet.

Die Mischungsingredienzien beinhalten neben dem Vernetzungssystem zumeist noch einen Füllstoff und/oder ein Verarbeitungshilfsmittel und/oder einen Weichmacher und/oder ein Alterungsschutzmittel sowie gegebenenfalls weitere Zusatzstoffe (z.B. Fasern, Farbpigmente). Diesbezüglich wird auf den allgemeinen Stand der Kautschukmischungstechnologie verwiesen.

Das Vulkanisat, das aus der erfindungsgemäßen Kautschukmischung unter Einsatz von DBU gebildet wird, ist insbesondere das elastische Material eines Schlauches, insbesondere wiederum eines Ölschlauches, Turboladerschlauches oder Kraftstoffschlauches.

In Verbindung mit dem bevorzugten schlauchtechnischen Anwendungsbereich unter Einsatz von ACM oder AEM wurden folgende Schlauchtypen näher untersucht:
- Ölschlauch mit Innenschicht und Außenschicht aus ACM oder AEM;
- Turboladerschlauch mit Innenschicht und Außenschicht aus ACM oder AEM;
- Kraftstoffschlauch mit Zwischenschicht und Außenschicht aus ACM oder AEM.

Die Untersuchung ergab dabei, dass die neu entwickelte alternative Vernetzung von ACM oder AEM mittels DBU im Schlauchbereich das herkömmliche Vernetzungssystem vollständig ersetzen kann. In der Verarbeitung kommt es zu keinerlei Nachteilen. Auch bei der Schlauchqualität kann man keine negativen Eigenschaften erkennen. Alle bisher durchgeführten Prüfstandläufe (dynamische Schlauchprüfungen) zeigen keine Einbuße in ihrer Perfomance.

## Patentansprüche

1. Vulkanisat, welches das elastische Material eines Schlauches ist, wobei der Schlauch ein Ölschlauch, Turboladerschlauch oder Kraftsloffschlauc;h ist, hergestellt durch Vulkanisieren einer vulkanisierbaren Kautschukmischung, enthaltend:
- eine Kautschukkomponente oder einen Kautschukkomponentenverschnitt sowie
- Mischungsingredienzienzien, beinhaltend wenigstens ein Vernetzungssystem, das wiederum einen Vernetzer und einen Co-Vernetzer umfasst,
**dadurch gekennzeichnet, dass** der Co-Vernetzer
1,8-Diazabicyclo [5.4.0] undec-7-en (DBU)
ist.

2. Vulkanisat nach Anspruch 1, **dadurch gekennzeichnet, dass** die Kautschukkomponente ein Acrylat-Kautschuk (ACM) oder ein Ethylen-Acrylat-Kautschuk (AEM) ist.

3. Vulkanisat nach Anspruch 1 oder 2, **dadurch gekennzeichnet, dass** das DBU in l1üssiger Form vorliegt.

4. Vulkanisat nach Anspruch 1 oder 2, **dadurch gekennzeichnet, dass** das DBU in angebatchter Form vorliegt.

5. Vulkanisat nach Anspruch 1 oder 2, **dadurch gekennzeichnet, dass** das DBU als Salz vorliegt.

6. Vulkanisat nach Anspruch 5, **dadurch gekennzeichnet, dass** das DBU mit einer Verbindung, die über ein acides Proton verfügt, ein Salz bildet.

7. Vulkanisat nach Anspruch 6, **dadurch gekennzeichnet, dass** das DBU mit einer organischen Carbonsäure, einem Phenol, einem Phenolharz, einem Alkohol, einem Amins, einer Sulfonsäure oder einer Mineralsäure ein Salz bildet.

8. Vulkanisat nach einem der Ansprüche 1 bis 7, **dadurch gekennzeichnet, dass** der Vernetzer Hexamethylendiamincarbamat (HMDAC) ist.

9. Vulkanisat nach einem der Ansprüche 1 bis 8, **dadurch gekennzeichnet, dass** der Mengenanteil an DBU 0,1 bis 5,0 phr beträgt.

10. Vulkanisat nach Anspruch 9, **dadurch gekennzeichnet, dass** der Mengenanteil an DBU 0,5 bis 3,5 phr beträgt.

11. Vulkanisat nach einem der Ansprüche 1 bis 10, **dadurch gekennzeichnet, dass** der Mengenanteil an Vernetzer 0,1 bis 5,0 phr beträgt.

12. Vulkanisat nach Anspruch 11, **dadurch gekennzeichnet, dass** der Mengenanteil an Vernetzer 0,5 bis 3,5 phr beträgt.

13. Vulkanisat nach einem der Ansprüche 1 bis 12, **dadurch gekennzeichnet, dass** die Mischungsingredienzien neben dem Vernetzungssystem einen Füllstoff und/oder ein Verarbeitungshilfsmittel und/oder einen Weichmacher und/oder ein Alterungsschutzmittel beinhalten.

## Claims

1. Vulcanizate which is the resilient material of a hose, where the hose is an oil hose, turbocharger hose or fuel hose, produced via vulcanization of a vulcanizable rubber mixture comprising:
• a rubber component or a rubber component blend and
• mixture ingredients including at least one crosslinking system which in turn comprises a crosslinking agent and a co-crosslinking agent,
**characterized in that** the co-crosslinking agent is 1,8-diazabicyclo[5.4.0]undec-7-ene (DBU).

2. Vulcanizate according to Claim 1, **characterized in that** the rubber component is an acrylate rubber (ACM) or an ethylene-acrylate rubber (AEM).

3. Vulcanizate according to Claim 1 or 2, **characterized in that** the DBU takes the form of a liquid.

4. Vulcanizate according to Claim 1 or 2, **characterized in that** the DBU takes the form of a masterbatch.

5. Vulcanizate according to Claim 1 or 2, **characterized in that** the DBU takes the form of a salt.

6. Vulcanizate according to Claim 5, **characterized in that** the DBU forms a salt with a compound having an acidic proton.

7. Vulcanizate according to Claim 6, **characterized in that** the DBU forms a salt with an organic carboxylic acid, with a phenol, with a phenolic resin, with an alcohol, with an amine, with a sulphonic acid or with a mineral acid.

8. Vulcanizate according to any of Claims 1 to 7, **characterized in that** the crosslinking agent is hexamethylenediamine carbamate (HMDAC).

9. Vulcanizate according to any of Claims 1 to 8, **characterized in that** the quantitative proportion of DBU is from 0.1 to 5.0 phr.

10. Vulcanizate according to Claim 9, **characterized in that** the quantitative proportion of DBU is from 0.5 to 3.5 phr.

11. Vulcanizate according to any of Claims 1 to 10, **characterized in that** the quantitative proportion of crosslinking agent is from 0.1 to 5.0 phr.

12. Vulcanizate according to Claim 11, **characterized in that** the quantitative proportion of crosslinking agent is from 0.5 to 3.5 phr.

13. Vulcanizate according to any of Claims 1 to 12, **characterized in that** the mixture ingredients include, alongside the crosslinking system, a filler and/or a processing aid and/or a plasticizer and/or an antioxidant.

## Revendications

1. Vulcanisat, qui est le matériau élastique d'un tuyau, le tuyau étant un tuyau à huile, un tuyau de turbocompresseur ou un tuyau à carburant, fabriqué par vulcanisation d'un mélange de caoutchouc vulcanisable, contenant :
- un composant caoutchoutique ou une coupe de composant caoutchoutique, ainsi que
- des ingrédients de mélange, comprenant au moins un système de réticulation, qui comprend lui-même un agent de réticulation et un co-agent de réticulation,
**caractérisé en ce que** le co-agent de réticulation est le 1,8-diazabicyclo[5.4.0]undéc-7-ène (DBU).

2. Vulcanisat selon la revendication 1, **caractérisé en ce que** le composant caoutchoutique est un caoutchouc d'acrylate (ACM) ou un caoutchouc d'éthylène-acrylate (AEM).

3. Vulcanisat selon la revendication 1 ou 2, **caractérisé en ce que** le DBU se présente sous formé liquide.

4. Vulcanisat selon la revendication 1 ou 2, **caractérisé en ce que** le DBU se présente sous forme mélangée.

5. Vulcanisat selon la revendication 1 ou 2, **caractérisé en ce que** le DBU se présente sous la forme d'un sel.

6. Vulcanisat selon la revendication 5, **caractérisé en ce que** le DBU forme un sel avec un composé qui dispose d'un proton acide.

7. Vulcanisat selon la revendication 6, **caractérisé en ce que** le DBU forme un sel avec un acide carboxylique organique, un phénol, une résine de phénol, un alcool, une amine, un acide sulfonique ou un acide minéral.

8. Vulcanisat selon l'une quelconque des revendications 1 à 7, **caractérisé en ce que** l'agent de réticulation est le carbamate d'hexaméthylène diamine (HMDAC).

9. Vulcanisat selon l'une quelconque des revendications 1 à 8, **caractérisé en ce que** la proportion de DBU est de 0,1 à 5,0 pce.

10. Vulcanisat selon la revendication 9, **caractérisé en ce que** la proportion de DBU est de 0,5 à 3,5 pce.

11. Vulcanisat selon l'une quelconque des revendications 1 à 10, **caractérisé en ce que** la proportion d'agent de réticulation est de 0,1 à 5,0 pce.

12. Vulcanisat selon la revendication 11, **caractérisé en ce que** la proportion d'agent de réticulation est de 0,5 à 3,5 pce.

13. Vulcanisat selon l'une quelconque des revendications 1 à 12, **caractérisé en ce que** les ingrédients de mélange comprennent, en plus du système de réticulation, une charge et/ou un adjuvant d'usinage et/ou un plastifiant et/ou un agent antivieillissement.
